# EUROPEAN PATENT SPECIFICATION

(11) **EP 2 202 433 B1**
(45) Date of publication and mention of the grant of the patent: **16.01.2013**
(21) Application number: 09174872.3
(22) Date of filing: 03.11.2009
(51) Int. Cl.: F16J 15/16, F16J 15/34, F16J 15/46, B29B 7/18, B29B 7/24, B29B 7/20

(54) **Dust seal structure of internal mixer**
Staubdichtungsstruktur eines Innenmischers
Structure de joint anti-poussière d'un mélangeur interne

(30) Priority: 24.12.2008 JP 2008327050
(43) Date of publication of application: 30.06.2010
(73) Proprietor: Mitsubishi Heavy Industries, Ltd., Tokyo 108-8215 (JP)
(72) Inventor: Moribe, Takashi, Hiroshima-shi Hiroshima (JP); Tatemi, Hiroki, Hiroshima-shi Hiroshima (JP); Hanada, Shuichi, Hiroshima-shi Hiroshima (JP); Morita, Mitsuru, Hiroshima-shi Hiroshima (JP); Nishihara, Yoshikazu, Hiroshima-shi Hiroshima (JP)
(74) Representative: Henkel, Breuer & Partner

(56) References cited:
- AU-B2- 587 640
- DE-A1- 3 843 288
- DE-A1- 19 819 741
- JP-A- 60 044 031
- JP-U- 59 155 361
- JP-U- 62 039 828

## Description

### Technical Field

The present invention relates to a dust seal structure of an internal mixer for preventing the leakage of a material being kneaded.

### Background Art

A batch type internal mixer is usually designed to produce a batch of compound by a series of actions comprising feeding materials of various formulations, such as rubber or plastic, into a mixing chamber by a floating weight, then kneading the material by the mixing rotors provided in the chamber and discharging the compound from the mixing chamber to the outside via a drop door after designated mixing action.

In such a mixer, the rotor shaft of the rotor is disposed to penetrate the mixing chamber. Thus, it is necessary to provide a leakage preventing means on the rotor shaft and the end surface of the rotor so that the contents of the mixing chamber does not leak from an end portion of the chamber to the outside.

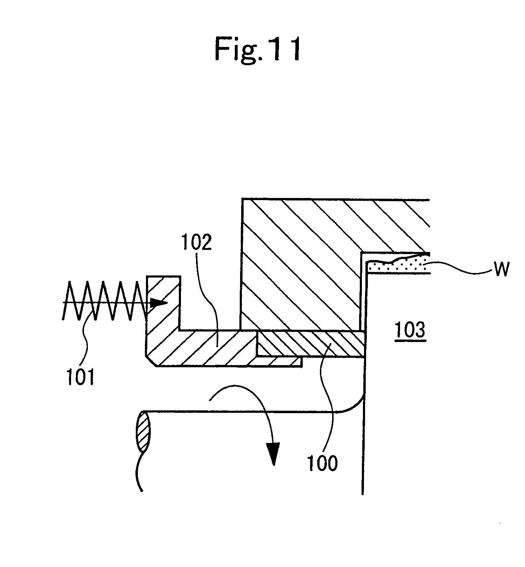

Hence, according to a conventional apparatus, as shown, for example, in Fig. 11, a ring-shaped dust seal 100 has always been pressed against the end surface of a rotor 103 by the spring force of a spring 101 via a press fitting 102, thereby preventing a material being kneaded (may hereinafter be referred to as a kneading material (W)) within a mixing chamber from leaking to the outside (see JP-A-2002-18263).

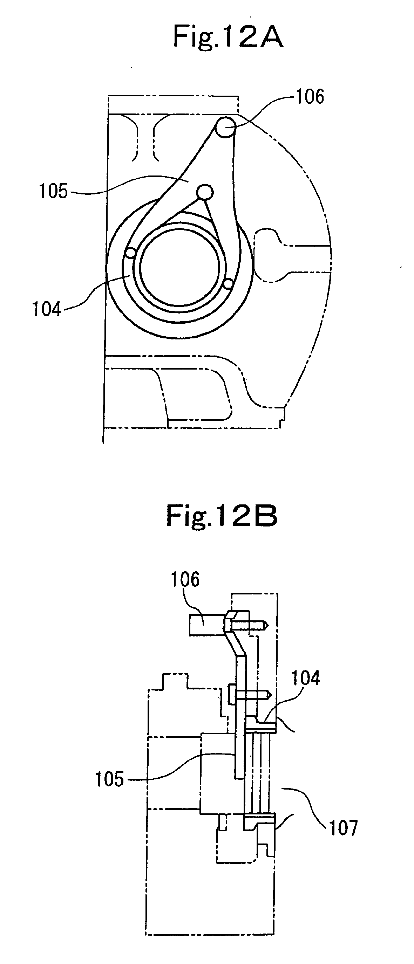

There is another conventional apparatus, as shown in Figs. 12A and 12B, which has always pressed a dust stop ring 104 against the end surface of a rotor 107 by a hydraulic cylinder 106 via a yoke 105, thereby preventing a kneading material within a mixing chamber from leaking to the outside (see JP-B-2-362044).

DE19819741A1 discloses a dust seal structure according to the preamble portion of claim 1 of an internal mixer which includes a casing with a mixing chamber and a pair of rotors rotating in the mixing chamber for kneading material which is charged into the mixing chamber to be kneaded there. The dust seal structure comprises an integral ring-shaped cylinder fitted to a rotor shaft of the rotor and mounted to an opening portion of the casing through which the rotor shaft passes. The integral cylinder is located at an outer peripheral edge of the opening portion of the casing and is adapted to urge a ring-shaped sealing member fitted on the rotor shaft in the axial direction of the rotor shaft against a ring surface fixed to the rotor shaft to inhibit the leakage of the kneading material from the mixing chamber.

Another seal structure of the internal mixer is disclosed in JP60-044031A and has a sealing pneumatic chamber in which a cylindrical piston is slidably arranged and adapted to be operated by pneumatic force to press a cylindrical packing to flat surfaces of step parts provided to both ends of a blade of the internal mixer.

### Summary of Invention

### Technical Problem

With the apparatus shown in Fig. 11, however, when the ring-shaped dust seal 100 has worn, there is need to maintain an appropriate sealing force by adjusting the springs 101 provided at several locations in the circumferential direction. This has posed a problem about maintainability. With the apparatus shown in Figs. 12A and 12B, on the other hand, the hydraulic pressure of the hydraulic cylinder 106 is transmitted to two locations in the circumferential direction of the dust stop ring 104 via the yoke 105. Thus, the sealing force and/or pressure of the dust stop ring 104 becomes uneven in the circumferential direction, causing a problem about sealability.

It is an object of the present invention, therefore, to provide a dust seal structure of an internal mixer which affords a sealing pressure uniform in the circumferential direction, resulting in satisfactory sealability and excellent maintainability.

### Solution to Problem

To attain the aforementioned object, the present invention provides a dust seal structure of an internal mixer as defined in claim 1.

The dust seal structure of an internal mixer according to the invention includes a casing having a mixing chamber defined therein, and a rotor rotating in the mixing chamber for kneading a material, which is a material charged into the mixing chamber to be kneaded there, the dust seal structure comprising a ring-shaped cylinder fitted to a rotor shaft of the rotor and mounted on a peripheral edge of an opening portion of the casing through which the rotor shaft passes, the cylinder being located at the peripheral edge of the opening portion of the casing, and being adapted to urge a ring-shaped sealing member fitted on the rotor shaft in a direction of the rotor shaft to inhibit leakage of the kneading material from the mixing chamber.

The cylinder is formed to be divisible into a plurality of segments in a circumferential direction of the rotor shaft, and has piston portions accommodated in one or more cylinder chambers defined independently of each other in the segments.

The sealing member may have sealing surfaces making close contact with and internally fitted on a peripheral surface of the opening portion of the casing and abutting on an end surface of the rotor.

The sealing member may be urged by the cylinder via a ring-shaped press fitting movable within the opening portion of the casing in the direction of the rotor shaft.

The sealing member may comprise a rotating sealing member fixedly provided on the rotor shaft and having a sealing surface on a side opposing an end surface of the rotor, and a fixed sealing member connected to the cylinder and urged toward a shaft end of the rotor shaft, and having a sealing surface in contact with the sealing surface of the rotating sealing member, and a tubular portion in sliding contact with a peripheral surface of the opening portion of the casing, and the sealing member may seal a gap between an outer peripheral surface side of the rotor shaft and an inner peripheral surface of the tubular portion.

The rotating sealing member may be fixedly provided on a sleeve which is inserted into the tubular portion of the fixed sealing member and fitted on the rotor shaft.

The cylinder may be a hydraulic cylinder.

The cylinder may be pneumatic suspension cylinder.

### Advantageous Effects of Invention

According to the above-described dust seal structure of an internal mixer concerned with the present invention, the ring-shaped sealing member is urged by the ring-shaped cylinder. Thus, the uniformity of sealing pressure in the circumferential direction of the sealing member is obtained, resulting in enhanced sealability. Moreover, maintenance work is easy, because it involves only pressure control over the cylinder. Furthermore, the cylinder is formed to be divisible into a plurality of segments in the circumferential direction of the rotor shaft. This facilitates the mounting and replacement of the cylinder, further improving the maintainability.

### Brief Description of Drawings

Fig. 1 is a perspective sectional view of a dust seal structure showing an Embodiment 1 .
Fig. 2 is a side sectional view of a dust seal structure showing an Embodiment 2 according to the present invention.
Fig. 3 is a front view of a cylinder of the present invention.
Fig. 4A is a sectional view, taken along line A-A, in Fig. 3.
Fig. 4B is a sectional view, taken along line A-A, in Fig. 3, in which a sealing member for a piston portion has been changed.
Fig. 5 is a front view of a modification of the cylinder.
Fig. 6 is a side sectional view of a dust seal structure showing Embodiment 3 of the present invention.
Fig. 7 is a front sectional view of a cylinder in Embodiment 3.
Fig. 8 is a sectional view, taken along line B-B, in Fig. 7.
Fig. 9 is an explanation drawing of the piston portion.
Fig. 10 is a front sectional view of essential portions of an internal mixer.
Fig. 11 is a side sectional view of a conventional dust seal structure.
Fig. 12A is a front view of a conventional different dust seal structure.
Fig. 12B is a side view of the conventional different dust seal structure.

### Description of Embodiments

Hereinafter, a dust seal structure of an internal mixer according to the present invention will be described in detail by embodiments with reference to the accompanying drawings.

### Embodiment 1

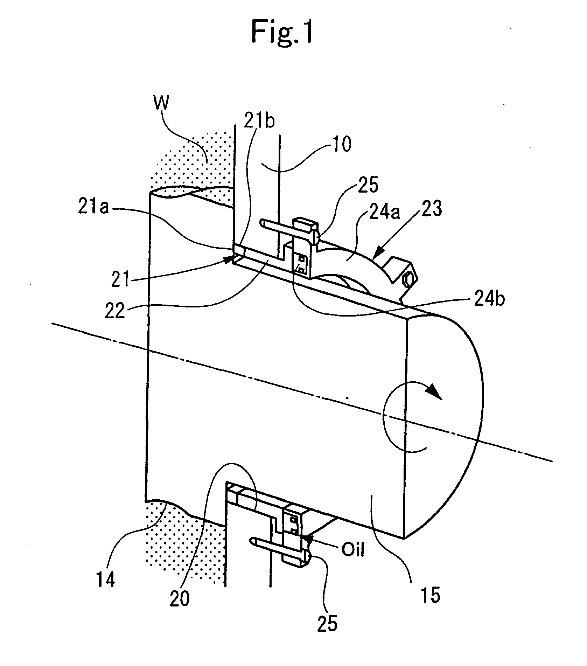

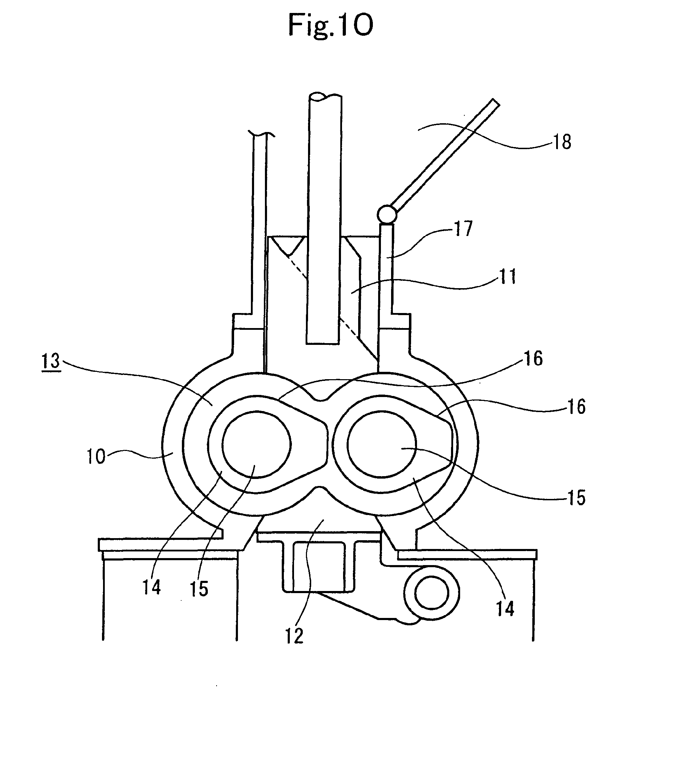

Fig. 1 is a perspective sectional view of a dust seal structure showing an Embodiment 1. Fig. 10 is a front sectional view of essential portions of an internal mixer.

As shown in Fig. 10, a casing 10 of an internal mixer, a floating weight 11, and a drop door 12 form a mixing chamber 13 having a cross section in the shape of spectacles.

Two rotors 14 are disposed parallel to each other within the mixing chamber 13 , and are rotated in directions different from each other by drive devices (motors, power transmission gears, etc.; not shown) installed at the ends of their rotor shafts 15. A blade portion 16 partially protruding in a radial direction is formed in the rotor 14, and the inner wall of the mixing chamber 13 has a curved surface corresponding to the locus of the blade portion 16 when rotated.

In the present mixer, a starting material such as rubber or plastic, and an additive such as a chemical (these materials will hereinafter be referred to collectively as a kneading material) are charged into the mixing chamber 13 through an inlet 18 of a hopper 17, with an ascendable and descendable floating weight 11 being raised. Then, the floating weight 11 is lowered to pressurize the kneading material. In this state, the rotors 14 are rotated, and the kneading material is engaged between the rotors 14, and kneaded in the mixing chamber. Eventually, the compound is discharged to the outside by opening the drop door 12 in a lower part of the casing 10.

As shown in Fig. 1, a ring-shaped sealing member 21 split in two or the like in the circumferential direction is loosely fitted over the rotor shaft 15, with the sealing member 21 being located inside an opening portion 20 of the casing 10 which the rotor shafts 15 are inserted through. The sealing member 21 has a sealing surface 21a contacting the end surface of the rotor 14, and a sealing surface 21b contacting the circumferential surface of the opening portion 20 of the casing 10.

Moreover, the sealing member 21 is urged toward the end surface of the rotor 14 (in the direction of the rotor shaft) by a ring-shaped cylinder 23 mounted on the peripheral edge of the opening portion 20 of the casing 10 via a flanged tubular press fitting 22. Thus, the sealing member 21 has its sealing surface 21a brought into contact, under pressure, with the end surface of the rotor 14.

The cylinder 23 is a hydraulic cylinder. Its head portion 24a is fixed to the outer wall surface of the casing 10 by a plurality of bolts 25 in the circumferential direction, and its piston portion 24b accommodated in a cylinder chamber of the head portion 24a and movable in the direction of the rotor shaft is connected to the flange part of the press fitting 22.

Because of the above configuration, when the hydraulic fluid or the like is supplied to the ring-shaped cylinder chamber, the similarly ring-shaped piston portion 24b is moved toward the end surface of the rotor 14 under its back pressure. Thus, the ring-shaped sealing member 21 is urged toward the end surface of the rotor 14 via the press fitting 22, and its sealing surface 21a is brought into contact, under pressure, with the end surface of the rotor 14. Consequently, the kneading material W is prevented from leaking from the aforementioned mixing chamber 13 to the outside through the sealed region.

On this occasion, the back pressure acts on the ring-shaped piston portion 24b evenly in the circumferential direction. On the sealing surface 21a of the similarly ring-shaped sealing member 21, therefore, a circumferentially uniform sealing pressure is obtained to improve the sealability. Furthermore, maintenance work is easy, because it involves only pressure control over the hydraulic fluid or the like which is supplied to the chamber of the cylinder 23.

### Embodiment 2

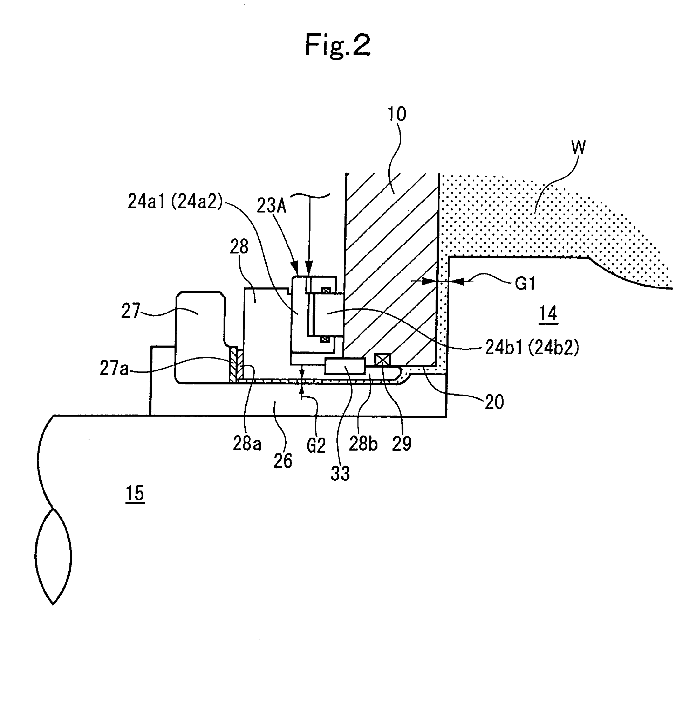

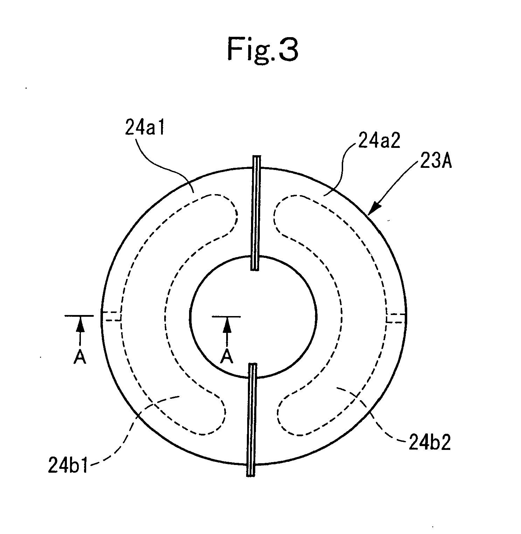

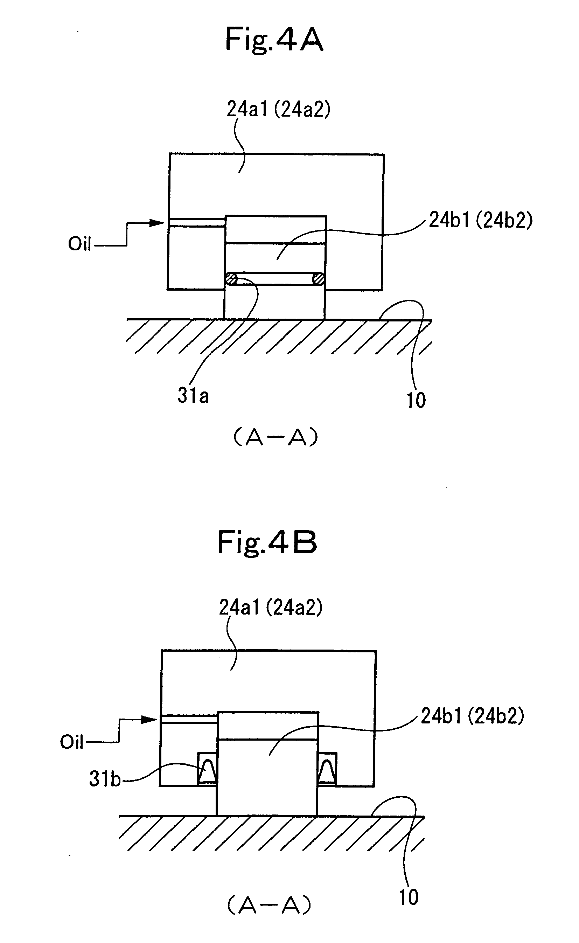

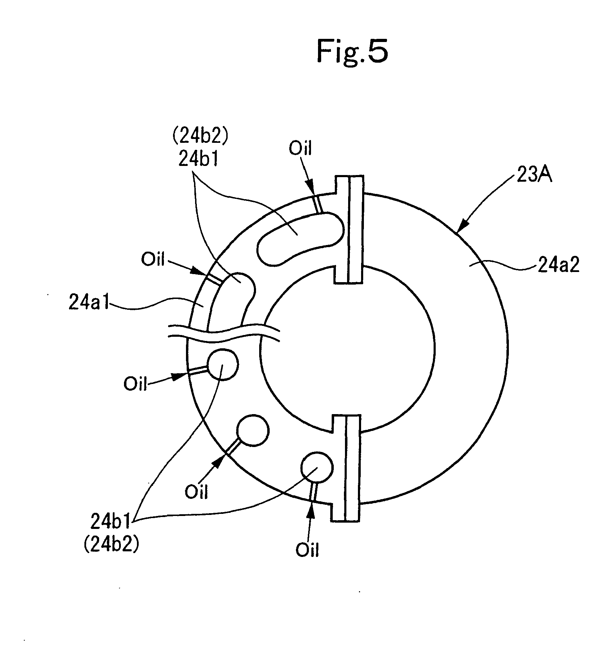

Fig. 2 is a side sectional view of a dust seal structure showing Embodiment 2 of the present invention. Fig. 3 is a front view of a cylinder. Fig. 4A is a sectional view, taken along line A-A, in Fig. 3. Fig. 4B is a sectional view, taken along line A-A, in Fig. 3, in which a sealing member for a piston portion has been changed. Fig. 5 is a front view showing a modification of the cylinder.

This is the dust seal structure of Embodiment 1 equipped with a ring-shaped rotating sealing member 27 which is fixedly provided on the rotor shaft 15 via a sleeve 26 and has a sealing surface 27a on a side opposing the end surface of the rotor 14, and a ring-shaped fixed sealing member 28 which is connected to a ring-shaped cylinder 23A, is urged in the shaft end direction of the rotor shaft 15, has a sealing surface 28a in contact with the sealing surface 27a of the rotating sealing member 27, and has a tubular portion 28b in sliding contact with the peripheral surface of the opening portion 20 of the casing 10 . The rotating sealing member 27 and the fixed sealing member 28 are preferably split in two in the circumferential direction.

In present embodiment, moreover, the cylinder 23A comprises a hydraulic cylinder. Piston portions 24b1, 24b2 thereof to be described later are fixed to the outer wall surface of the casing 10, and head portions 24a1, 24a2 thereof are connected to the fixed sealing member 28 in such a manner as to be movable in the rotor shaft direction under the pressure of hydraulic fluid supplied to the cylinder chamber. As in Embodiment 1, the head portions 24a1, 24a2 may be fixed, and the piston portions 24b1, 24b2 may be movable.

The sealing surface 27a of the rotating sealing member 27 and the sealing surface 28a of the fixed sealing member 28 may be applied onto a base material by coating or overlaying for hardening, or may be applied by pasting a different member to a base material. In Fig. 2, a sealing member 29 acts between the peripheral surface of the opening portion 20 and the tubular portion 28b, and a key 33 works for the fixed sealing member 28.

As shown in Fig. 3 and Figs. 4A, 4B, the cylinder 23A has its entire head portion formed to be divisible in two in the circumferential direction of the rotor shaft 15, as the head portions 24a1 and 24a2, and has the piston portions 24b1 and 24b2 accommodated in the cylinder chambers defined independently in these divisional head portions. As the sealing members for the piston portions 24b1, 24b2, 0 rings 31a may be used (see Fig. 4A) , or packings 31b may be used (see Fig. 4B).

As shown in Fig. 5, moreover, a plurality of oval or round cylinder chambers may additionally be formed at equal intervals in the circumferential direction of the head portions 24a1, 24a2 provided in divisional form and assembled, and the piston portions 24b1, 24b2 may be accommodated therein. That is, when the head portions 24a1 and 24a2 are assembled in the shape of a ring, the piston portions 24b1 and 24b2 are arranged at equal intervals over the entire circumference. Other features are the same as those in Embodiment 1, and duplicate explanations are omitted.

According to the present embodiment, therefore, when the hydraulic fluid or the like is supplied at the same pressure to each chamber of the cylinder 23A, the head portions 24a1 and 24a2 assembled in the form of the ring are moved toward the shaft end of the rotor shaft 15 under the back pressure of the hydraulic fluid. Thus, the fixed sealing member 28 connected to the head portions 24a1, 24a2 is also urged in the same direction, and its sealing surface 28a is brought into contact under pressure with the sealing surface 27a of the rotating sealing member 27.

As a result, the kneading material W is prevented from leaking from the aforementioned mixing chamber 13 to the outside by passing through a gap G1 between the end surface of the rotor 14 and the inner wall surface of the casing 10 and a gap G2 between the inner peripheral surface of the tubular portion 28b of the fixed sealing member 28 and the outer peripheral surface of the sleeve 26.

On this occasion, the back pressure acts circumferentially evenly on the head portions 24al and 24a2 assembled in the form of the ring. Thus, a circumferentially uniform plunge pressure is exerted on the sealing surface 28a of the similarly ring-shaped fixed sealing member 28, thereby enhancing the sealability between the sealing surface 28a and the sealing surface 27a of the rotating sealing member 27.

Moreover, maintenance work is easy, because it involves only pressure control over the hydraulic fluid or the like which is supplied to the chamber of the cylinder 23A. Furthermore, the cylinder 23A is formed to be divisible in two in the circumferential direction of the rotor shaft 15. This facilitates the mounting and replacement of the cylinder 23A, thus improving the maintainability further. In addition, the distance between the above-mentioned sealed region and the mixing chamber 13 is longer than that in Embodiment 1, thus suppressing the situation that the lubricating oil or the like supplied to the sealed region enters the kneading material W to deteriorate its quality.

### Embodiment 3

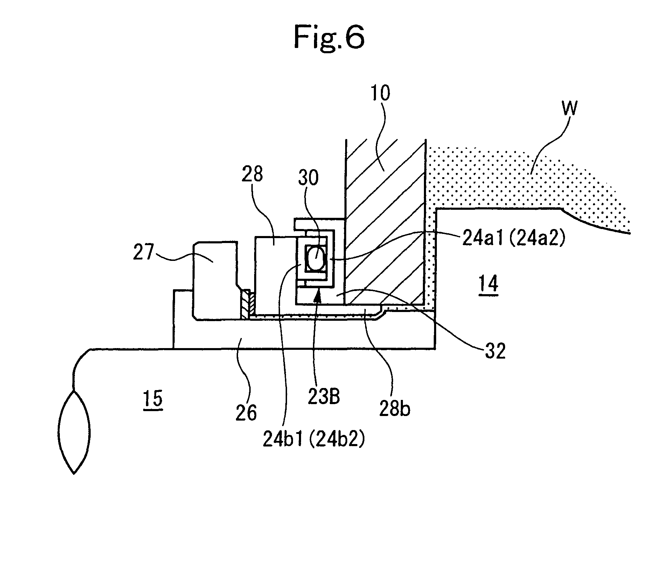

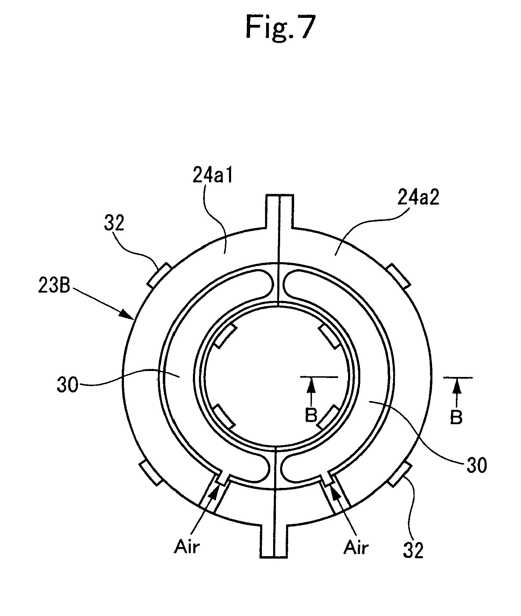

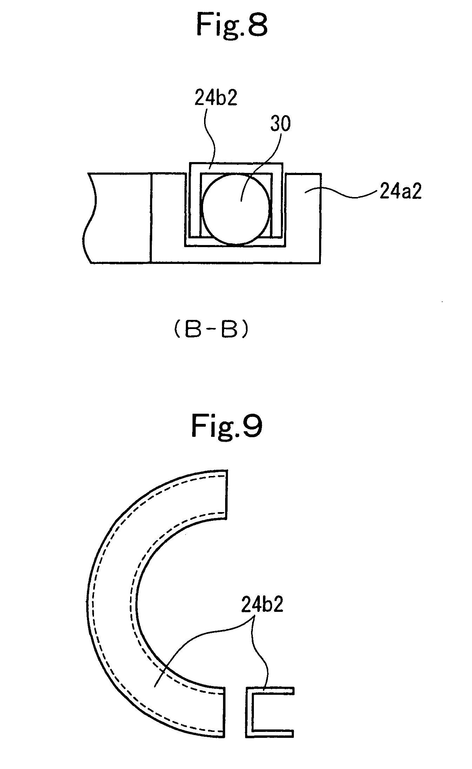

Fig. 6 is a side sectional view of a dust seal structure showing Embodiment 3 of the present invention. Fig. 7 is a front sectional view of a cylinder in this embodiment. Fig. 8 is a sectional view, taken along line B-B, in Fig. 7. Fig. 9 is an explanation drawing of a piston portion.

This is an embodiment in which the cylinder 23A of Embodiment 2 comprising the hydraulic cylinder is substituted by a cylinder 23B of a pneumatic suspension type using a rubber tube 30 or the like, the head portions 24a1, 24a2 are fixed to the outer wall surface of the casing 10 via a plurality of guides 32, and the piston portions 24b1, 24b2 of a channel section are connected to the fixed sealing member 28. Since other features are the same as those in Embodiment 2, duplicate explanations are omitted.

According to the present embodiment, the effects of preventing the entry of a contaminant (foreign matter in the lubricating oil) into the cylinder chamber, and leakage of the internal pressure of the cylinder are obtained by use of the cylinder 23B of the pneumatic suspension type, in addition to the same actions and effects as those in Embodiment 2.

It goes without saying that the present invention is not limited to the above embodiments, and various changes and modifications may be made without departing from the claims of the present invention. For example, in accordance with the invention the cylinder 23 of Embodiment 1 may be formed to be divisible into a plurality of segments in the circumferential direction of the rotor shaft 15. Also, the number of the divisional segments of the cylinders 23, 23A and 23B, if divided, need not be limited to two, but may be three or greater.

### Reference Signs List

- 10: Casing
- 11: Floating weight
- 12: Drop door
- 13: Mixing chamber
- 14: Rotor
- 15: Rotor shaft
- 21: Sealing member
- 21a,21b: Sealing surface
- 22: Press fitting
- 23,23A,23B: Cylinder
- 24a,24a1,24a2: Head portion
- 24b,24b1,24b2: Piston portion
- 26: Sleeve
- 27: Rotating sealing member
- 27a: Sealing surface
- 28: Fixed sealing member
- 28a: Sealing surface
- 28b: Tubular portion
- 30: Rubber tube
- W: Kneading material

## Claims

1. A dust seal structure of an internal mixer including a casing (10) having a mixing chamber (13) defined therein, and a rotor (14) rotating in the mixing chamber for kneading a material (W), which is charged into the mixing chamber (13) to be kneaded there,
the dust seal structure comprising a ring-shaped sealing member (21;27,28), and a ring-shaped cylinder (23A,23B) which in use is fitted to a rotor shaft (15) of the rotor (14) and is mounted on a peripheral edge of an opening portion (20) of the casing (10) through which the rotor shaft (15) passes, and
the cylinder (23A,23B) in use being located at the peripheral edge of the opening portion (20) of the casing (10), and being adapted to urge the ring-shaped sealing member (21;27,28) which in use is fitted on the rotor shaft (15) in a direction of the rotor shaft (15) to inhibit leakage of the kneading material (W) from the mixing chamber (13)
**characterized in that**
the cylinder (23A,23B) is formed to be divisible into a plurality of segments in a circumferential direction of the rotor shaft (15), and
has piston portions (24b1, 24b2) accommodated in one or more cylinder chambers defined independently of each other in the segments.

2. The dust seal structure of an internal mixer according to claim 1, wherein
the sealing member (21) has sealing surfaces (21a,21b) for making close contact with and adapted to be internally fitted on a peripheral surface of the opening portion (20) of the casing (10) and abutting on an end surface of the rotor (14).

3. The dust seal structure of an internal mixer according to claim 2, wherein
the sealing member (21) is urged by the cylinder (23A,23B) via a ring-shaped press fitting (22) movable within the opening portion (20) of the casing (10) in the direction of the rotor shaft (15).

4. The dust seal structure of an internal mixer according to claim 1, 2 or 3, wherein
the sealing member (27,28) comprises
a rotating sealing member (27) adapted to be fixedly provided on the rotor shaft (15) and having a sealing surface (27a) on a side, in use opposing an end surface of the rotor (14), and
a fixed sealing member (28) connected to the cylinder (23A,23B) and, in use urged toward a shaft end of the rotor shaft (15), and having a sealing surface (28a) in contact with the sealing surface (27a) of the rotating sealing member (27), and a tubular portion (28b) adapted to be in sliding contact with a peripheral surface of the opening portion (20) of the casing (10), and
the sealing member (27,28) seals a gap between an outer peripheral surface side of the rotor shaft (15) and an inner peripheral surface of the tubular portion (28b).

5. The dust seal structure of an internal mixer according to claim 4, wherein
the rotating sealing member (27) is fixedly provided on a sleeve (26) which is inserted into the tubular portion (28b) of the fixed sealing member (28) and adapted to be fitted on the rotor shaft (15).

6. The dust seal structure of an internal mixer according to any one of claims 1 to 5, wherein
the cylinder (23A) is a hydraulic cylinder.

7. The dust seal structure of an internal mixer according to any one of claims 1 to 5, wherein
the cylinder (23B) is a pneumatic suspension cylinder.

8. An internal mixer including a casing (10) having a mixing chamber (13) defined therein, a rotor (14) rotating in the mixing chamber for kneading a material (W), which is charged into the mixing chamber (13) to be kneaded there, and a dust seal structure according to any one of claims 1 to 7.

## Patentansprüche

1. Eine Staubdichtungsstruktur eines Innenmischers mit einem Gehäuse (10) mit einer darin definierten Mischkammer (13) und einem Rotor (14), welcher in der Mischkammer zum Kneten eines Materials (W), welches in die Mischkammer (13) zum Kneten geladen wird, rotiert,
wobei die Staubdichtungsstruktur ein ringförmiges Dichtungselement (21;27,28) und einen ringförmigen Zylinder (23A,23B), welcher im Gebrauch an eine Rotorwelle (15) des Rotors (14) angebaut ist und an einem Umfangsrand eines Öffnungsabschnitts (20) des Gehäuses (10), durch den die Rotorwelle (15) verläuft, befestigt ist, umfasst, und
wobei der Zylinder (23A,23B) im Gebrauch an dem Umfangsrand des Öffnungsabschnitts (20) des Gehäuses (10) angeordnet und dazu angepasst ist, das ringförmige Dichtungselement (21;27,28), welches im Gebrauch an bzw. auf der Rotorwelle (15) angebaut ist, in einer Richtung der Motorwelle (15) zu drängen, um Leckage des Knetmaterials (W) aus der Mischkammer (13) zu verhindern, **dadurch gekennzeichnet, dass**
der Zylinder (23A,23B) in eine Vielzahl von Segmenten in einer Umfangsrichtung der Rotorwelle (15) teilbar ausgebildet ist, und
Kolbenabschnitte (24b1,24b2) aufweist, die in einer oder mehreren Zylinderkammern, welche unabhängig voneinander in den Segmenten definiert sind, aufgenommen sind.

2. Die Staubdichtungsstruktur eines Innenmischers gemäß Anspruch 1, wobei
das Dichtungselement (21) Dichtungsoberflächen (21a,21b) aufweist, zum Herstellen engen Kontakts mit und dazu angepasst, um intern an bzw. auf einer Umfangsoberfläche des Öffnungsabschnitts (20) des Gehäuses (10) angebracht zu sein und an einer Endoberfläche des Rotors (14) anzuliegen.

3. Die Staubdichtungsstruktur eines Innenmischers gemäß Anspruch 2, wobei
das Dichtungselement (21) durch den Zylinder (23A,23B) über einen ringförmigen Druckpresseinsatz (22) in der Richtung der Rotorwelle (15) beweglich gedrängt wird, welcher in dem Öffnungsabschnitt (20) des Gehäuses (10) ist.

4. Die Staubdichtungsstruktur eines Innenmischers gemäß Anspruch 1, 2 oder 3, wobei
das Dichtungselement (27,28) umfasst:
ein rotierendes Dichtungselement (27), welches dazu angepasst ist, fest an bzw. auf der Rotorwelle (15) vorgesehen zu sein, und eine Dichtungsoberfläche (27a) auf einer Seite umfasst, die im Gebrauch einer Endoberfläche des Rotors (14) gegenüberliegt, und
ein feststehendes Dichtungselement (28), welches mit dem Zylinder (23A,23B) verbunden ist und im Gebrauch zu einem Wellenende der Rotorwelle (15) gedrängt wird und eine Dichtungsoberfläche (28a), welche mit der Dichtungsoberfläche (27a) des rotierenden Dichtungselements (27) in Kontakt steht, sowie einen röhrenförmigen Abschnitt (28b) besitzt, der sich im Gebrauch mit einer Umfangsoberfläche des Öffnungsabschnitts (20) des Gehäuses (10) in Gleitkontakt befindet, und
das Dichtungselement (27,28) einen Zwischenraum zwischen einer äußeren Umfangsoberflächenseite der Rotorwelle (15) und einer inneren Umfangsoberfläche des röhrenförmigen Abschnitts (28b) abdichtet.

5. Die Staubdichtungsstruktur eines Innenmischers gemäß Anspruch 4, wobei
das rotierende Dichtungselement (27) fest an bzw. auf einer Buchse (26) vorgesehen ist, welche in den röhrenförmigen Abschnitt (28b) des feststehenden Dichtungselements (28) eingebracht ist und dazu angepasst ist, an bzw. auf der Rotorwelle (15) angebracht zu werden.

6. Die Staubdichtungsstruktur eines Innenmischers gemäß einem der Ansprüche 1 bis 5, wobei
der Zylinder (23A) ein hydraulischer Zylinder ist.

7. Die Staubdichtungsstruktur eines Innenmischers gemäß einem der Ansprüche 1 bis 5, wobei
der Zylinder (23B) ein pneumatischer Suspensionszylinder ist.

8. Ein Innenmischer mit einem Gehäuse (10) mit einer darin definierten Mischkammer (13), einem Rotor (14), welcher in der Mischkammer rotiert, um ein Material (W) zu kneten, welches in die Mischkammer (13) geladen wird, um dort geknetet zu werden, und einer Staubdichtungsstruktur gemäß einem der Ansprüche 1 bis 7.

## Revendications

1. Structure de joint anti-poussière d'un mélangeur interne comprenant un boîtier (10) ayant une chambre de mélange (13) définie à l'intérieur de ce dernier, et un rotor (14) tournant dans la chambre de mélange pour malaxer une matière (W), qui est chargée dans la chambre de mélange (13) pour être malaxée à l'intérieur de cette dernière,
la structure de joint anti-poussière comprenant un élément d'étanchéité de forme annulaire (21 ; 27, 28), et un cylindre de forme annulaire (23A, 23B) qui, à l'usage, est monté sur un arbre de rotor (15) du rotor (14) et est monté sur un bord périphérique d'une partie d'ouverture (20) du boîtier (10) à travers laquelle l'arbre de rotor (15) passe, et
le cylindre (23A, 23B) étant positionné, à l'usage, au niveau du bord périphérique de la partie d'ouverture (20) du boîtier (10), et étant adapté pour pousser l'élément d'étanchéité de forme annulaire (21 ; 27, 28) qui, à l'usage, est monté sur l'arbre de rotor (15) dans une direction de l'arbre de rotor (15) pour empêcher la fuite de la matière de malaxage (W) de la chambre de mélange (13),
**caractérisée en ce que** :
le cylindre (23A, 23B) est formé pour être divisible en une pluralité de segments dans une direction circonférentielle de l'arbre de rotor (15), et
a des parties de piston (24b1, 24b2) logées dans une ou plusieurs chambres de cylindre définies indépendamment les unes des autres dans les segments.

2. Structure de joint anti-poussière d'un mélangeur interne selon la revendication 1, dans laquelle :
l'élément d'étanchéité (21) a des surfaces d'étanchéité (21a, 21b) pour établir un contact étroit avec et adapté pour être monté intérieurement sur une surface périphérique de la partie d'ouverture (20) du boîtier (10) et venant en butée sur une surface d'extrémité du rotor (14).

3. Structure de joint anti-poussière d'un mélangeur interne selon la revendication 2, dans laquelle :
l'élément d'étanchéité (21) est poussé par le cylindre (23A, 23B) via un raccord de forme annulaire monté à la presse (22) mobile à l'intérieur de la partie d'ouverture (20) du boîtier (10) dans la direction de l'arbre de rotor (15).

4. Structure de joint anti-poussière d'un mélangeur interne selon la revendication 1, 2 ou 3, dans laquelle :
l'élément d'étanchéité (27, 28) comprend :
un élément d'étanchéité rotatif (27) adapté pour être prévu de manière fixe sur l'arbre de rotor (15) et ayant une surface d'étanchéité (27a) sur un côté, opposée à l'usage à une surface d'extrémité du rotor (14), et
un élément d'étanchéité fixe (28) raccordé au cylindre (23A, 23B), et à l'usage, poussé vers une extrémité d'arbre de l'arbre de rotor (15), et ayant une surface d'étanchéité (28a) en contact avec la surface d'étanchéité (27a) de l'élément d'étanchéité rotatif (27), et une partie tubulaire (28b) adaptée pour être en contact coulissant avec une surface périphérique de la partie d'ouverture (20) du boîtier (10), et
l'élément d'étanchéité (27, 28) rend étanche un espace situé entre un côté de surface périphérique externe de l'arbre de rotor (15) et une surface périphérique interne de la partie tubulaire (28b), étanche.

5. Structure de joint anti-poussière d'un mélangeur interne selon la revendication 4, dans laquelle :
l'élément d'étanchéité rotatif (27) est prévu de manière fixe sur un manchon (26) qui est inséré dans la partie tubulaire (28b) de l'élément d'étanchéité fixe (28) et est adapté pour être monté sur l'arbre de rotor (15).

6. Structure de joint anti-poussière d'un mélangeur interne selon l'une quelconque des revendications 1 à 5, dans laquelle
le cylindre (23A) est un cylindre hydraulique.

7. Structure de joint anti-poussière d'un mélangeur interne selon l'une quelconque des revendications 1 à 5, dans laquelle :
le cylindre (23B) est un cylindre de suspension pneumatique.

8. Mélangeur interne comprenant un boîtier (10) ayant une chambre de mélange (13) définie à l'intérieur de ce dernier, un rotor (14) tournant dans la chambre de mélange pour malaxer une matière (W), qui est chargée dans la chambre de mélange (13) pour y être malaxée, et une structure de joint anti-poussière selon l'une quelconque des revendications 1 à 7.
